Europäisches Patentamt

European Patent Office

Office européen des brevets

(11) Veröffentlichungsnummer: **0 215 157**
**A1**

## EUROPÄISCHE PATENTANMELDUNG

(21) Anmeldenummer: 85116348.5

(22) Anmeldetag: 20.12.85

(51) Int. Cl.⁴: **G01C 9/28 , B26B 11/00**

(30) Priorität: 16.07.85 DE 8520489 U

(43) Veröffentlichungstag der Anmeldung:
25.03.87 Patentblatt 87/13

(84) Benannte Vertragsstaaten:
**AT BE CH DE FR GB IT LI NL SE**

(71) Anmelder: **meterex Karl Kuntze GmbH & Co.**
**Rheinstrasse 7**
**D-5650 Solingen 11(DE)**

(72) Erfinder: **Gruber, Bruno**
**Ehbauer-Ring 2**
**D-8039 Puchheim(DE)**

(74) Vertreter: **Lorenz, Werner, Dipl.-Ing.**
**Fasanenstrasse 7**
**D-7920 Heidenheim(DE)**

(54) **Wasserwaage.**

(57) Eine Wasserwaage zum Prüfen der Lage waagerechter Teile ist mit einer Libelle (4), die in einer Ausnehmung in einem Gehäuse (1) angeordnet ist, versehen. Das Gehäuse (1) ist mit einer Aussparung (21) versehen, in der ein Taschenmesser (10) angeordnet ist oder in dessem Gehäuse (1) Taschenmesserklingen (13,14) befestigt sind.

Fig.3

# Wasserwaage

Die Erfindung betrifft eine Wasserwaage zum Prüfen der Lage waagerechter Teile mit einer Libelle, die in einer Ausnehmung in einem Gehäuse angeordnet ist.

Wasserwaagen, auch Richtwaagen oder Setzwaagen genannt, finden ihre Verwendung hauptsächlich in der Bautechnik und im Maschinenbau, aber auch beim Heimwerkerhobby. Dabei verwendet man die Wasserwaage zum Prüfen der Lage senkrechter und waagerechter Teile. Die Wasserwaage enthält eine leicht gekrümmte Glasröhre (Röhrenlibelle) oder eine Glasdose mit leicht kugeligem Deckel - (Dosenlibelle). Die Libelle ist bis auf eine kleine Gasblase mit Alkohol oder Äther gefüllt. Bei horizontaler Lage der Wasserwaage steht die Gasblase genau in der Mitte. Diese Wasserwaagen sind im allgemeinen relativ groß, d.h. sie weisen im allgemeinen eine Länge zwischen ca. 45 cm und ca. 1 m auf, insbesondere im Bau-und Handwerkerbereich. Mit derartigen Wasserwaagen sind zwar sehr genaue Messungen möglich, aber sie sind relativ umständlich mit sich zu führen, da sie dementsprechend sperrig und schwer sind. Aus diesem Grunde gibt es auch bereits Wasserwaagen mit relativ kleinen Abmessungen. Insbesondere bei Handwerkerarbeiten, z.B. im Hobbybereich, sind jedoch häufig auch noch andere Tätigkeiten mit Werkzeugen oder anderen Hilfsmitteln erforderlich, wofür diese gesondert bereitgehalten werden müssen.

Der vorliegenden Erfindung liegt nun die Aufgabe zugrunde, eine Wasserwaage zu schaffen, die einfach und problemlos mit sich zu führen ist und mit der im Bedarfsfalle auch noch andere Arbeiten durchführbar sind.

Erfindungsgemäß wird diese Aufgabe gelöst durch ein Gehäuse, das mit einer Aussparung versehen ist, in der ein Taschenmesser angeordnet ist oder in dessem Gehäuse Taschenmesserklingen befestigt sind.

Durch das erfindungsgemäße Gehäuse ist die Wasserwaage relativ klein und handlich und dadurch sehr leicht mit sich zu führen, z.B. in einer Jackentasche oder in einer Handtasche. Mit dem Taschenmesser können außerdem zusätzliche Tätigkeiten verrichtet werden, und zwar ohne daß man hierzu ein gesondertes Werkzeug benötigt. Die Art der Tätigkeiten hängt dabei davon ab, welche Teile das Taschenmesser ggf. neben einem Messer enthält, wie z.B. Flaschenöffner, Schraubenzieher, Korkenzieher, Säge o.dgl..

Zwar kann mit der erfindungsgemäßen Wasserwaage alleine keine so hohe Genauigkeit erreicht werden wie mit einer großen, langen Wasserwaage, aber dies ist häufig auch nicht nötig. Außerdem kann die Meßgenauigkeit im Bedarfsfalle z.B. durch ein unter die Wasserwaage gestetztes, entsprechend langes Meßbrett erhöht werden.

Zusätzlich zu den üblichen Taschenmesserklingen kann das Taschenmesser auch noch andere -an sich bekannte -Teile aufweisen. Ebenso können bei einer Anordnung der Klingen direkt in dem Gehäuse der Wasserwaage selbstverständlich auch andere Teile direkt in dem Gehäuse schwenkbar befestigt sein, wie z.B. eine Säge, ein Schraubendreher, ein Bohrer und dgl.

In Ausgestaltung der Erfindung kann vorgesehen sein, daß sich die Aussparung im wesentlichen über die gesamte Länge des Gehäuses erstreckt. Will man das Taschenmesser benutzen, kann man dessen Klingen somit auf einfache Weise über einen entsprechenden Längsschlitz in dem Gehäuse aus-und einklappen.

In vorteilhafter Weise können an der der Längsseite (Oberseite) mit der Libelle gegenüberliegenden Seite (Unterseite) im Bereich der Stirnseiten des Gehäuses Auflagepunkte angeordnet sein, die als Auflagemeßpunkte dienen. Somit ist das Ablesen der Wasserwaage optimal vereinfacht und genau möglich. Bei der Benutzung des Taschenmessers verhindern die Auflagemeßpunkte zudem ein Abrutschen der Hand.

Von Vorteil ist es, wenn die Messerklingen des Taschenmessers im eingeklappten Zustand im Gehäuse auf der Unterseite in einer Vertiefung angeordnet sind. Auf diese Weise ist das Taschenmesser beim Gebrauch der Wasserwaage nicht störend.

Das Gehäuse kann aus Kunststoff oder Metalldruckguß bestehen, wodurch die Herstellung einfach, schnell und billig zu bewerkstelligen ist.

In erfindungsgemäßer Ausgestaltung kann vorgesehen sein, daß die Taschenmesserklingen in Bolzen drehbar gelagert sind, die in dem Gehäuse befestigt sind. In diesem Falle bildet das Gehäuse der Wasserwaage gleichzeitig auch die Umhüllung bzw. die Griffschalen für die Messerklingen.

Im Bedarfsfalle kann das Gehäuse aus zwei Teilen bestehen, wobei in die Aussparung ein Taschenmesser mit einem Griff eingelegt ist. In diesem Falle ist das Taschenmesser eine separate Einheit, das in der Wasserwaage bzw. in das Gehäuse integriert ist. Auf diese Weise ist eine - schnelle Montage der erfindungsgemäßen Einheit möglich. Ebenso kann das Gehäuse auch einteilig sein.

Von Vorteil ist es, wenn die Teilungsebene durch die Längsmittelebene verläuft, was die Herstellung der erfindungsgemäßen Einheit wesentlich vereinfacht.

In dem zweiteiligen Gehäuse kann das Taschenmesser und/oder die Libelle entnehmbar bzw. austauschbar angeordnet sein. Es ist somit auf einfache Weise möglich, wenn das Taschenmesser defekt ist, dieses auszutauschen. Ist die Libelle verschmutzt oder beschädigt, so kann diese ebenso auf leichte Weise entnommen werden.

Von Vorteil ist es, wenn die Ausnehmung für die Libelle an der schmalen Oberseite und der Längsschlitz zur Aufnahme der Taschenmesserklingen in der Unterseite des Gehäuses angeordnet ist. Dadurch ist die erfindungsgemäße Einheit sehr handlich und die Wasserwaage ist sehr leicht ablesbar.

In Ausgestaltung der Erfindung kann vorgesehen sein, daß die Aussparung für das Taschenmesser und ggf. auch die Ausnehmung für die Libelle spiegelbildlich in beiden Gehäuseteilen liegen. Bei Bedarf können somit gleiche Gehäuseteile verwendet werden, wodurch die Herstellung des Gehäuses sehr einfach zu bewerkstelligen ist, da die Teile z.B. als Kunststoffspritzteile herstellbar sind, wobei nur ein Werkzeug notwendig ist.

Die beiden Gehäuseteile können ggf. leicht lösbar miteinander verbunden sein. Ist z.B. das Taschenmesser defekt, kann man dieses schnell und problemlos austauschen. Will man ganz einfach ein anderes Taschenmesser einsetzen, so ist auch das möglich.

Hierzu können die beiden Gehäuseteile durch Bolzen, Schrauben, Nieten o.dgl. miteinander verbunden sein. Somit kann man die beiden Gehäuseteile schnell und problemlos zusammenmontieren und bei Verwendung von Schrauben auch wieder demontieren.

Nachfolgend sind Ausführungsbeispiele der Erfindung anhand der Zeichnung prinzipmäßig dargestellt.

Es zeigt:

Fig. 1 eine Draufsicht auf die schmale Oberseite eines ersten Modelles der erfindungsgemäßen Wasserwaage,

Fig. 2 eine Stirnansicht des ersten Modelles der erfindungsgemäßen Wasserwaage,

Fig. 3 eine Seitenansicht auf eine Längsseite der erfindungsgemäßen Wasserwaage, wobei die Klingen des Taschenmessers ausgeklappt sind,

Fig. 4 eine Draufsicht auf die Innenseite eines zweiten Modelles auf das Gehäuseteil 1A mit einer aufgeklappten Klinge und

Fig. 5 eine Draufsicht auf die Innenseite des Gehäuseteiles 1B des zweiten Modelles.

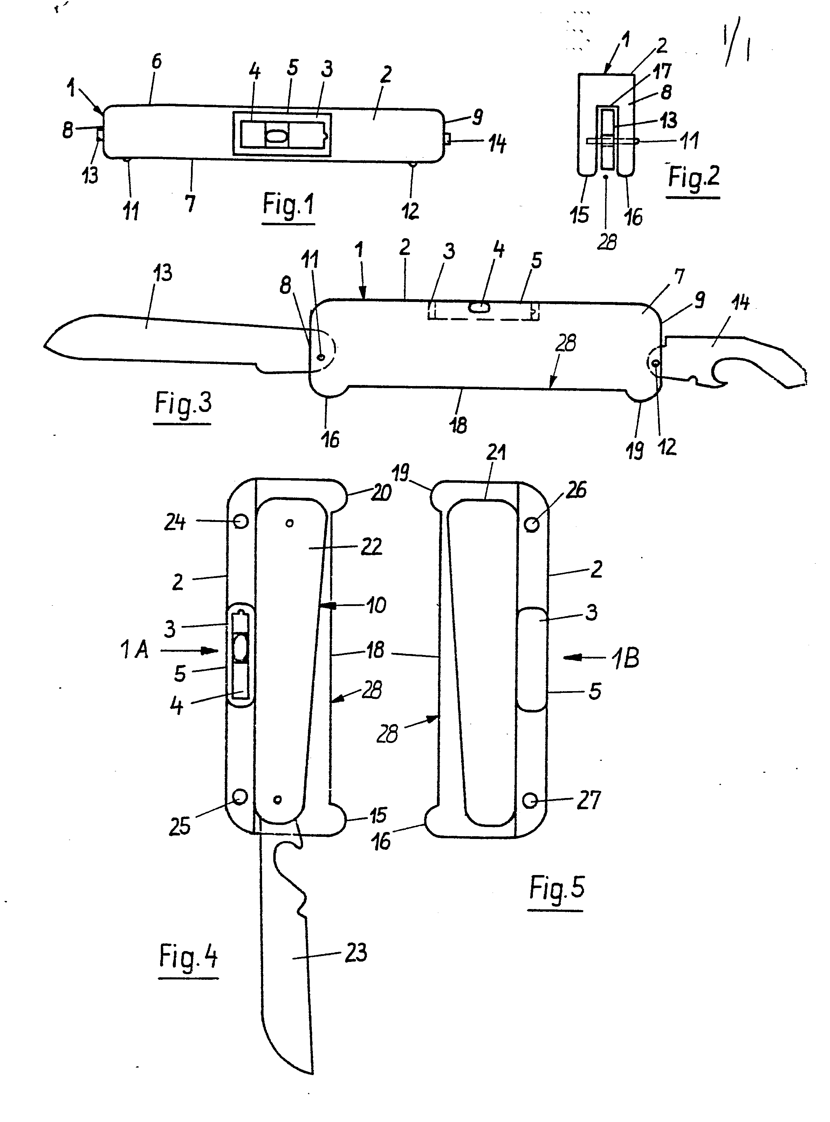

Fig. 1 stellt eine Draufsicht auf eine schmale Oberseite 2 eines Gehäuses 1 eines ersten Modelles der erfindungsgemäßen Wasserwaage dar. Im mittleren Bereich der schmalen Oberseite 2 ist eine Ausnehmung 3 ersichtlich, in der sich eine Libelle 4 befindet. Die Ausnehmung 3 ist durch ein Sichtfenster 5 abgedeckt, wodurch die Libelle vor Beschädigungen und Ver schmutzungen geschützt ist. An die Längsseiten 6 und 7 des Gehäuses 1 - schließen sich Stirnseiten 8 und 9 an, in deren mittleren Bereich die abgerundeten Enden von Taschenmesserklingen 13 und 14 eines Taschenmessers ersichtlich sind. An der Längsseite 7 des Gehäuses 1 sind im Bereich der Stirnseiten 8 und 9 zwei Bolzen 11 und 12 zur Befestigung der Taschenmesserklingen 13 und 14 angeordnet. Dies bedeutet, daß damit die Taschenmesserklingen fest in dem Gehäuse 1 angeordnet sind, bzw. das Gehäuse 1 gleichzeitig die Umhüllung der Taschenmesserklingen 13 und 14 bildet.

In der Fig. 2 ist die Stirnseite 8 des Gehäuses 1 des ersten Modelles der erfindungsgemäßen Wasserwaage dargestellt, wobei sich im unteren Bereich der Stirnseite 8 bzw. auf der Unterseite des Gehäuses 1 Auflagemeßpunkte 15 und 16 im Bereich der Stirnseite 9 Auflagemeßpunkte 19 und 20 befinden, zwischen denen ein Längsschlitz 17 liegt, in dem sich die Klingen 13 und 14 des Taschenmessers befinden, und der sich über die ganze Unterseite 28 des Gehäuses 1 zwischen den Bolzen 11 und 12, die die Drehpunkte für die Taschenmesserklingen bilden, erstreckt. Durch die Auflagemeßpunkte 15, 16 und 19, 20 kann die Wasserwaage exakt auf die zu vermessende Unterlage aufgesetzt werden.

Fig. 3 zeigt eine Seitenansicht auf die Längsseite 7 des Gehäuses 1 des ersten Modelles der erfindungsgemäßen Wasser waage. Im mittleren Bereich der schmalen Oberseite 2 ist die Ausnehmung 3, die die Libelle 4 beinhaltet, die von dem Sichtfenster 5 abgedeckt wird, gestrichelt dargestellt. An die schmale Oberseite 2 des Gehäuses 1 schließt sich in dem dargestellten Ausführungsbeispiel im linken Bereich die Stirnseite 8 an, in derem Bereich der Bolzen 11 zur Befestigung der Klinge 13 angeordnet ist. In diesem Bereich ist auch die ausgeklappte Klinge 13 ersichtlich. An die Stirnseite 8 schließt sich im unteren Bereich der Auflagemeßpunkt 16 an, der in eine Vertiefung 18 übergeht, an die sich wieder der Auflagemeßpunkt 19 auf der gegenüberliegenden Seite anschließt. An den Auflagemeßpunkt 19 - schließt sich die Stirnseite 9 an.

In den Fig. 4 und 5 ist eine andere Ausgestaltung der Wasserwaage mit einem zweiteiligen Gehäuse dargestellt. Aus der Fig. 4 ist eine Draufsicht auf die Innenseite eines Gehäuseteiles 1A ersichtlich. Im wesentlichen mittleren Bereich des Gehäuseteiles 1A befindet sich hierbei eine Aussparung 21, in der ein Taschenmesser 10 als gesonderte Einheit angeordnet ist, das aus einem Griff 22 besteht, in dessen Innerem eine Klinge 23 angeordnet ist. Im mittleren Bereich der schmalen Oberseite 2 ist die Ausnehmung 3 ersichtlich, die die Libelle 4 enthält und die mit dem Sichtfenster 5 abgedeckt ist. Gegenüber der schmalen Oberseite 2 befindet sich die Unterseite 28 mit der Vertiefung 18, an die sich die Auf lagemeßpunkte 15 und 20 anschließen. Im Bereich des Griffes 22 des Taschenmessers 10 befindet sich im oberen Bereich des Gehäuses 1A eine Aushöhlung 24. Im Bereich der Befestigung der Klinge 23 ist im Gehäuse 21 ein Zapfen 25 angeordnet.

Aus der Fig. 5 ist das zweite, dazugehörige Gehäuseteil B ersichtlich, wobei sich in der Darstellung im linken Bereich die Vertiefung 18 befindet, an die sich die Auflagemeßpunkte 16 und 19 anschließen. Im mittleren Bereich des Gehäuseteiles 1B befindet sich die Aussparung 21 zur Aufnahme des Taschenmessers 10. Neben der Aussparung 21 für das Taschenmesser 10 ist im Bereich der schmalen Oberseite 2 in der Darstellung im oberen Bereich ein Zapfen 26 und im unteren Bereich eine Aushöhlung 27 angeordnet. Im mittleren Bereich der schmalen Oberseite 2 ist die Ausnehmung 3 für die Libelle dargestellt, die durch ein Sichtfenster 5 abdeckbar ist.

Bei der Montage des Gehäuseteiles 1A mit dem Gehäuseteil 1B nimmt die Aushöhlung 24 des Gehäuseteiles 1A den Bolzen 26 des Gehäuseteiles 1B und die Aushöhlung 27 des Gehäuseteiles 1B den Bolzen 25 des Gehäuseteiles 1A auf.

Selbstverständlich sind jedoch auch andere Formen und Ausge staltungen im Rahmen der Erfindung möglich. So kann z.B. die Libelle statt mittig auch seitlich versetzt angeordnet sein, wodurch man eine größere einheitliche Fläche, z.B. für Werbezwecke, erhält.

## Ansprüche

1. Wasserwaage zum Prüfen der Lage waagerechter Teile mit einer Libelle, die in einer Ausnehmung in einem Gehäuse angeordnet ist,

**dadurch gekennzeichnet,** daß das Gehäuse (1) mit einer Aussparung (21) versehen ist, in der ein Taschenmesser (10) angeordnet ist oder in dessem Gehäuse (1) Taschenmesserklingen (13,14) befestigt sind.

2. Wasserwaage nach Anspruch 1,

**dadurch gekennzeichnet,** daß sich die Aussparung (21) im wesentlichen über die gesamte Länge des Gehäuses (1) erstreckt.

3. Wasserwaage nach Anspruch 1 oder 2,

**dadurch gekennzeichnet,** daß an der der Seite - (Oberseite 2) mit der Libelle (4) gegenüberliegenden Seite (Unterseite 28) im Bereich der Stirnseiten (8,9) des Gehäuses (1) Auflagemeßpunkte (15,16,19,20) angeordnet sind.

4. Wasserwaage nach einem der Ansprüche 1 -3,

**dadurch gekennzeichnet,** daß die Messerklingen (13,14) des Taschenmessers (10) im eingeklappten Zustand im Gehäuse (1) in einer Vertiefung (18) angeordnet sind.

5. Wasserwaage nach einem der Ansprüche 1 -4,

**dadurch gekennzeichnet,** daß die Taschenmesserklingen (13,14) in Bolzen (11 und 12) drehbar gelagert sind, die in dem Gehäuse (1) befestigt sind.

6. Wasserwaage nach einem der Ansprüche 1 -4,

**dadurch gekennzeichnet,** daß das Gehäuse (1) aus zwei Teilen (1A und 1B) besteht, und daß in die Aussparung (11) ein Taschenmesser (10) mit einem Griff (22) eingelegt ist.

7. Wasserwaage nach Anspruch 6,

**dadurch gekennzeichnet,** daß die Teilungsebene durch die Längsmittelebene verläuft.

8. Wasserwaage nach einem der Ansprüche 6 oder 7, **dadurch gekennzeichnet,** daß das Taschenmesser (10) und/oder die Libelle (4) aus dem Gehäuse (1A bzw. 1B) entnehmbar ist.

9. Wasserwaage nach einem der Ansprüche 1 -8, **dadurch gekennzeichnet,** daß die Ausnehmung (3) für die Libelle (4) an der schmalen Oberseite (2) und der Längsschlitz (17) zur Aufnahme der Taschenmesserklingen (13,14) in der Unterseite (28) des Gehäuses (1) angeordnet sind.

10. Wasserwaage nach einem der Ansprüche 6 -9, **dadurch gekennzeichnet,** daß die Aussparung (21) für das Taschenmesser (10) und/oder die Ausnehmung (B) für die Libelle (4) spiegelbildlich in beiden Gehäuseteilen (A,B) liegt.

1/1

Fig.1

Fig.2

Fig.3

Fig.4

Fig.5

GR 1398 EU

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH-A- 536 695 (WENGER SA) * Spalte 1, Zeilen 26-41; Figuren 1,3 * | 1,5 | G 01 C 9/28 B 26 B 11/00 |
| A | | 2,4,6, 7,10 | |
| | --- | | |
| Y | US-A-2 013 850 (O.M.C. MARISCHAL) * Seite 1, Spalte 1, Zeile 46 - Spalte 2, Zeile 7; Figuren 2,4 * | 1,5 | |
| | --- | | |
| A | US-A-1 463 573 (T. CHAMPLIN) * Seite 2, Zeilen 3-8; Figur 1 * | 1 | |
| | --- | | |
| A | US-A-3 832 775 (A.J. STAHEL et al.) * Figur 13; Spalte 5, Zeilen 29-40 * | 1,2,5 | RECHERCHIERTE SACHGEBIETE (Int. Cl.4) G 01 C B 26 B |
| | --- | | |
| A | GB-A- 801 506 (IMPERIAL KNIFE CO. INC.) * Figur 1 * | 3 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 17-11-1986 | HUNT J.H. |